# EUROPEAN PATENT APPLICATION

(11) **EP 4 082 926 A1**
(43) Date of publication of application: **02.11.2022**
(21) Application number: 20908231.2
(22) Date of filing: 01.09.2020
(51) Int. Cl.: B65D 5/56, B65D 5/20

(54) **FLAT-PACK PAPER CONTAINER AND FILM ADHESION MOLDING MACHINE**

(30) Priority: 25.12.2019 JP 2019235300
(71) Applicant: Tokan Kogyo Co., Ltd., Tokyo 141-0022 (JP)
(72) Inventor: YAMAGUCHI Masaru, Tokyo 141-0022 (JP); KAIMORI Tomokazu, Tokyo 141-0022 (JP); NARITA Kodai, Tokyo 141-0022 (JP)
(74) Representative: Rings, Rolf
(86) International application number: PCT/JP2020/033074
(87) International publication number: WO 2021/131164

(57) **Abstract**

[Problem]

There is provided an assembled paper container that allows suppressing leakage of contained matter or seepage of contained matter from a container section of a container main body.

[Solution]

An assembled paper container (1) according to an embodiment includes a container main body (11) including a container section (12), and a resinous film (3). The container main body (11) includes a bottom surface (121), a plurality of side surfaces (122), and a flange section (13) connected to the plurality of side surfaces (122), the flange section (13) being flush with a top surface (131) after the assembly. The top surface (131) has gaps (22) extending from the container section (12) toward an outside of the container main body (11). The resinous film (3) covers a top surface (131) and includes protruding sections (31) above the gaps (22) traversing the gaps (22).

## Description

### TECHNICAL FIELD

Embodiments of the present invention relate to an assembled paper container and a film adhesion molding machine.

### BACKGROUND ART

There has been known an assembled paper container in which a tray shaped container main body including a flange section in an upper end is assembled from a paper-made blank sheet using paper as a main raw material. In the assembled paper container, a thermoplastic resinous film having resin property is sometimes attached to an inner surface of the container main body and a top surface of the flange section (Patent Document 1 and Patent Document 2). The assembled paper container with the resinous film has resin property, and thus is mainly used as a tray or a bowl for containing food products and the like.

Compared with a plastic container, the assembled paper container is a product that can, for example, suppress generation of secondary microplastic occurred in the environment and the like, and be environmentally considerate. Furthermore, the resinous film can be stripped off from the container main body, thereby allowing the resinous film to be separated from the container main body, namely paper, and thus the resinous film and the container main body can be recycled individually. Given these advantages, the assembled paper container is expected to be used as a packaging container for food products and the like or a storage container for food products and the like by applying, for example, Modified Atmosphere Packaging (MAP).

Patent Document 1: JP-A-H6-293334
Patent Document 2: JP-A-2019-172339

### DISCLOSURE OF THE INVENTION

### PROBLEMS TO BE SOLVED BY THE INVENTION

In the container main body of the assembled paper container, due to its shape, gaps caused by end surfaces of the blank sheet approaching one another occurs on the top surface of the flange section. Currently, even by covering the inner surface of the container main body and the top surface of the flange section with the resinous film, these gaps are difficult to be closed completely. The resinous film is thin. In a case where the resinous film is attached to the assembled paper container by, for example, vacuum pressure, the resinous film gets suctioned into the gaps. The gaps are difficult to be closed by the resinous film alone.

A packaging method of packaging by replacing air inside the container section of the container main body with a food packaging gas that is appropriate for food products is being developed (such as MAP). In a case where such packaging method is applied to the assembled paper container with the resinous film, a top seal becomes attached to the resinous film on the top surface of the flange section. However, the top seal is also thin. Therefore, even by attaching the top seal to the resinous film, a cavity along the gap occurs between the top surface of the resinous film and a lower surface of the top seal. Even with the top seal, the cavity is difficult to be closed completely. Moreover, both ends of the cavity are opened. The container section of the container main body is communicated with an outside of the container main body via the cavity.

Based on the above, in the assembled paper container with the resinous film, even by covering the container section with the top seal, leakage of contained matter or seepage of contained matter from the container section may possibly occur via the cavity.

The embodiments of the present invention provide an assembled paper container that can suppress leakage of contained matter or seepage of contained matter from the container section of the container main body, and a film adhesion molding machine that can manufacture the assembled paper container.

### SOLUTIONS TO THE PROBLEMS

An assembled paper container according to a first aspect of the invention is an assembled paper container including a container main body and a resinous film. The container main body is assembled from a blank sheet using paper as a main material and includes a container section. The resinous film covers an inner surface of the container section. The container main body includes a bottom surface, a plurality of side surfaces standing upright from the bottom surface, and a flange section connected to the plurality of side surfaces. The flange section is flush with a top surface after the assembly. The top surface of the flange section has gaps caused by end surfaces of the blank sheet approaching one another. The gaps extend from the container section toward an outside of the container main body. The resinous film covers the top surface of the flange section and includes protruding sections above the gaps traversing the gaps.

In an assembled paper container according to a second aspect of the invention, which is in the first aspect, the protruding section includes at least one corner section above the gap traversing the gap.

An assembled paper container according to a third aspect of the invention further includes, which is in the first aspect or the second aspect, a top seal attached to the resinous film on the top surface of the flange section and covering the container section. The top seal traverses the gaps while squashing the protruding sections, and the top seal is attached to the resinous film above the top surface of the flange section.

In an assembled paper container according to a fourth aspect of the invention, which is in the third aspect, the resinous film is folded into three layers or more at least inside the gap.

A film adhesion molding machine according to a fifth aspect of the invention attaches a resinous film to an assembled paper container with a flange section. The film adhesion molding machine includes a lower mold, an adhesive section, an upper mold, a pressing machine, and a molding section. The assembled paper container is placed on the lower mold. The adhesive section is provided to the lower mold, suctioning the resinous film via the assembled paper container placed on the lower mold, and attaching the resinous film to the assembled paper container. The upper mold is opposed to the lower mold and sandwiching the resinous film with the lower mold. The pressing machine is housed in the upper mold and includes a pressing machine that presses a resinous film placed on the flange section. The molding section is provided to the pressing machine, suctions the resinous film placed on the flange section, and molds a protruding section that becomes a protrusion with respect to the flange section on the resinous film.

In a film adhesion molding machine according to a sixth aspect of the invention, which is in the fifth aspect, a suction direction of the molding section is opposite to a suction direction of the adhesive section.

In a film adhesion molding machine according to a seventh aspect of the invention, which is in a fifth or sixth aspect, a suction timing of the molding section is earlier than a suction timing of the adhesive section.

### EFFECTS OF THE INVENTION

In the assembled paper container according to the first to fourth aspects, the resinous film covering the top surface of the flange section includes the protruding sections above the gaps traversing the gaps. Therefore, the top seal can be attached to the resinous film so as to block the cavity having both ends opened above the gap. Accordingly, the assembled paper container according to the first to fourth aspects can provide an assembled paper container that can suppress leakage of contained matter or seepage of contained matter from the container section of the container main body.

The film adhesion molding machine according to the fifth to seventh aspects includes the molding section that suctions the resinous film arranged on the flange section and molds the protruding section that becomes a protrusion with respect to the flange section on the resinous film. Accordingly, the film adhesion molding machine according to the fifth to seventh aspects can provide a film adhesion molding machine that can manufacture an assembled paper container according to the first to fourth aspects.

### BRIEF DESCRIPTION OF THE DRAWINGS

Fig. 1(a) is a plan view illustrating one example of an assembled paper container according to an embodiment. Fig. 1(b) is a side view illustrating one example of the assembled paper container according to the embodiment. Fig. 1(c) is a perspective view illustrating one example of the assembled paper container according to the embodiment.
Fig. 2 is a plan view illustrating one example of a blank sheet.
Fig. 3(a) to Fig. 3(d) are schematic cross-sectional views illustrating one example of a protruding section.
Fig. 4 is a plan view illustrating one example of a container section being covered with a top seal.
Fig. 5(a) to Fig. 5(d) are schematic cross-sectional views illustrating a state where the top seal is being attached to a resinous film.
Fig. 6(a) to Fig. 6(d) are schematic cross-sectional views illustrating a state where the top seal is being attached to the resinous film.
Fig. 7(a) and Fig. 7(b) are schematic cross-sectional views illustrating one example of a film adhesion molding machine.
Fig. 8(a) and Fig. 8(b) are schematic cross-sectional views illustrating a state of the protruding section being formed.
Fig. 9 is a schematic block diagram illustrating one example of a film attaching system.
Fig. 10(a) and Fig. 10(b) are schematic cross-sectional views illustrating one example of a protruding section according to a first modification.
Fig. 11(a) and Fig. 11(b) are schematic cross-sectional views illustrating one example of a protruding section according to a second modification.
Fig. 12(a) and Fig. 12(b) are schematic cross-sectional views illustrating one example of a protruding section according to a third modification.
Fig. 13(a) and Fig. 13(b) are schematic cross-sectional views illustrating one example of a protruding section according to a fourth modification.
Fig. 14(a) and Fig. 14(b) are schematic cross-sectional views illustrating one example of a protruding section according to a fifth modification.
Fig. 15(a) and Fig. 15(b) are schematic cross-sectional views illustrating one example of a protruding section according to a sixth modification.

### DESCRIPTION OF PREFERRED EMBODIMENTS

The following describes an embodiment of the present invention with reference to the drawings. In every drawing, common parts are attached common reference numerals and overlapping descriptions are omitted.

### (Assembled Paper Container)

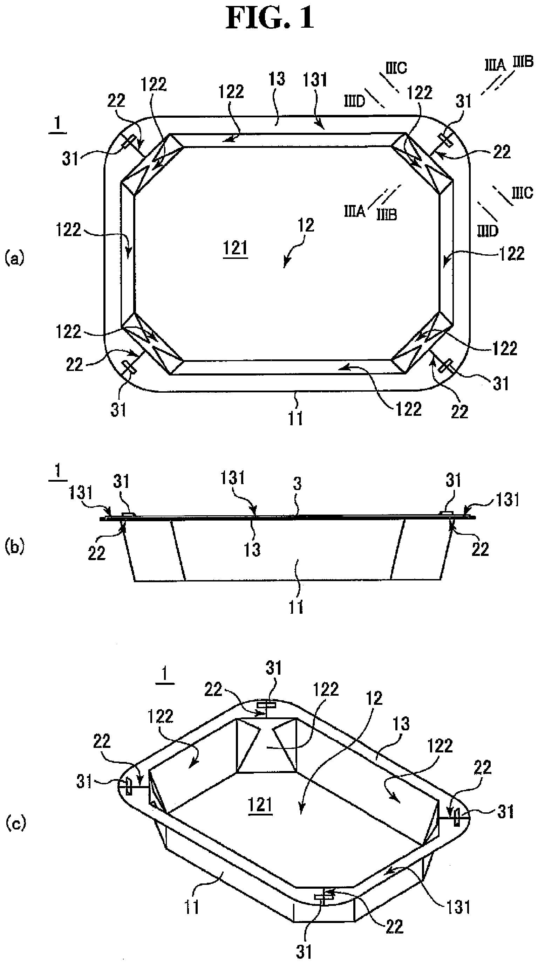

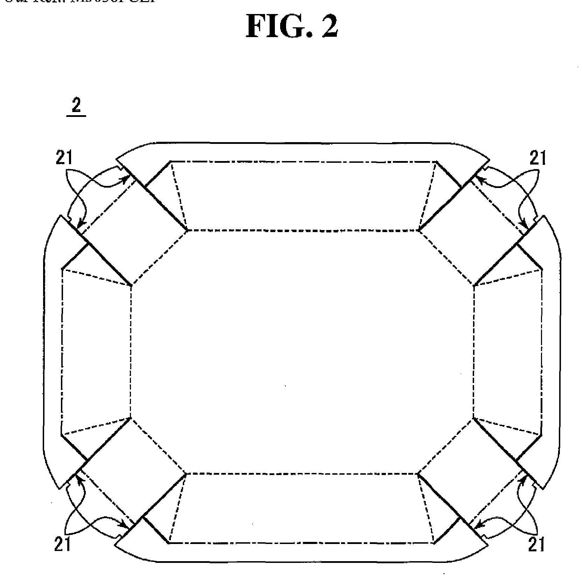

Fig. 1(a) is a plan view illustrating one example of an assembled paper container according to the embodiment. Fig. 1(b) is a side view illustrating one example of the assembled paper container according to the embodiment. Fig. 1(c) is a perspective view illustrating one example of the assembled paper container according to the embodiment. Fig. 2 is a plan view illustrating one example of a blank sheet.

An assembled paper container 1 illustrated in Fig. 1(a) to Fig. 1(c) is assembled from a blank sheet 2 illustrated in Fig. 2. The blank sheet 2 uses paper as a main material. In Fig. 2, the dotted lines indicate "trough folds," and the one dot chain lines indicate "mountain folds." The trough fold lines and the mountain fold lines are indicated by, for example, perforations, half cuttings, and ruled lines. Furthermore, the thick solid lines indicate "notches." By performing trough folds and mountain folds on the blank sheet 2, the assembled paper container 1 can be obtained.

The assembled paper container 1 includes a container main body 11 and a resinous film 3. The container main body 11 includes a container section 12 and a flange section 13. The container main body 11 includes a bottom surface 121, and a plurality of side surfaces 122 standing upright from the bottom surface 121. The container section 12 is constituted of the bottom surface 121 and the plurality of side surfaces 122. This embodiment includes eight of the side surfaces 122. Three or more of the side surfaces 122 can constitute the container section 12. Three or more of the side surfaces 122 are sufficient.

The flange section 13 is connected outwardly to an upper end of each side surface 122 from the container section 12. The flange section 13 includes a top surface 131. The top surface 131 of the flange section 13 becomes flush with the flange section 13 after assembly. Gaps 22 exist in the top surface 131 of the flange section 13. The gap 22 occurs in the top surface 131 by end surfaces 21 of the blank sheet 2 approaching one another after assembly. The gap 22 extends from the container section 12 toward the outside of the container main body 11. This embodiment illustrates an example of the gap 22 occurring in four corners of the flange section 13.

The resinous film 3 covers an inner surface of the container section 12, inner surfaces of the side surfaces 122, and the top surface 131 of the flange section 13. As the resinous film 3, one that has, for example, water-tightness and gas diffusibility is selected. Furthermore, an example of the resinous film 3 may be a thermoplastic resinous film. The resinous film 3 includes protruding sections 31 above the gaps 22. The protruding section 31 traverses the gap 22. This embodiment includes four of the gaps 22 and also four of the protruding sections 31. The four protruding sections 31 are provided above the respective four gaps 22. A plurality of the protruding sections 31 may be provided to each gap 22. The protruding section 31 may have any shape such as a half circular shape, quadrangular shape, or triangular shape when viewed from a cross-sectional surface along the line IIIB-IIIB in Fig. 1(a).

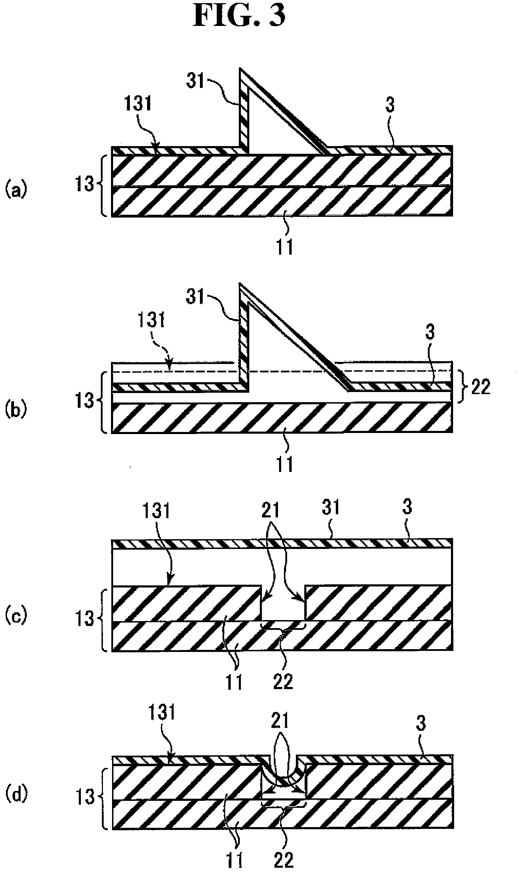

Fig. 3(a) to Fig. 3(d) are schematic cross-sectional views illustrating one example of the protruding section. The cross-sectional surface illustrated in Fig. 3(a) is taken along the line IIIA-IIIA in Fig. 1(a). The cross-sectional surface illustrated in Fig. 3(b) is taken along the line IIIB-IIIB in Fig. 1(a). The cross-sectional surface illustrated in Fig. 3(c) is taken along the line IIIC-IIIC in Fig. 1(a). The cross-sectional surface illustrated in Fig. 3(d) is taken along the line IIID-IIID in Fig. 1(a).

As illustrated in Fig. 3(a) to Fig. 3(d), the resinous film 3 falls into the gap 22. However, the protruding section 31 protrudes upward from the flange section 13 above the gap 22.

Examples of the resinous film 3 that can mold the protruding section 31 may be polyolefin, such as polyethylene (PE) and polypropylene (PP), polyester, such as polyvinyl chloride and polyethylene terephthalate (PET), ethylene-vinyl acetate copolymer (EVA), ethylene-acrylic acid copolymer, polyamide, polyvinylidene chloride, polystyrene, polycarbonate, polybutene, and polyvinyl alcohol. The resinous film 3 may be a single film made of any above-described material, or a film made by mixing a plurality of the above-described materials. Furthermore, the resinous film 3 may be a single layer film or a laminated film laminating a plurality of layers.

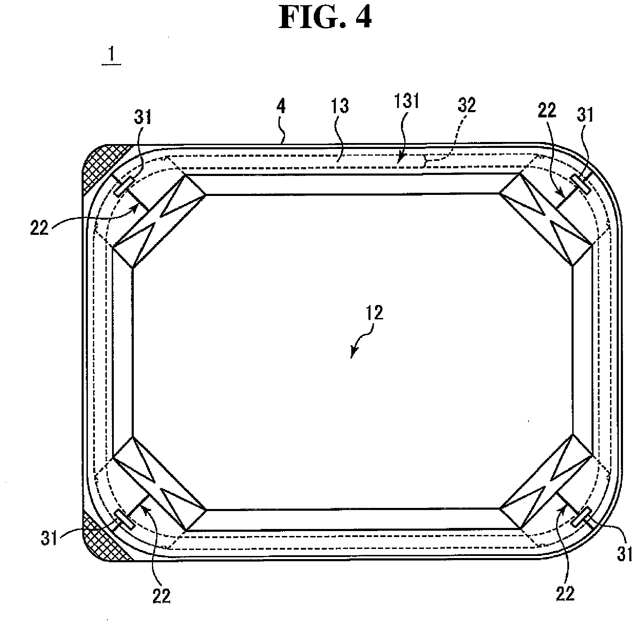

Fig. 4 is a plan view illustrating one example of the container section being covered with a top seal.

As illustrated in Fig. 4, the assembled paper container 1 can pack and house food products and the like by covering the container section 12 with a top seal 4. The top seal 4 is attached to the resinous film 3 on the top surface 131 of the flange section 13. Thus, the top seal 4 covers the container section 12. In this embodiment, the top seal 4 traverses the gaps 22 and is attached to the resinous film 3 while squashing the protruding section 31 above the top surface 131 of the flange section 13. When attaching the top seal 4 to the resinous film 3, the top seal 4 is pressed by a pressing machine (such as a sealing head) of a pressing machine. The pressing machine presses the top seal 4 in a region indicated as a pressing region 32. In this embodiment, the protruding section 31 is designed to fit the whole protruding section 31 within a width of the pressing region 32. Accordingly, the protruding section 31 can be securely squashed by the pressing machine.

### <Top Seal Attachment: Reference Example>

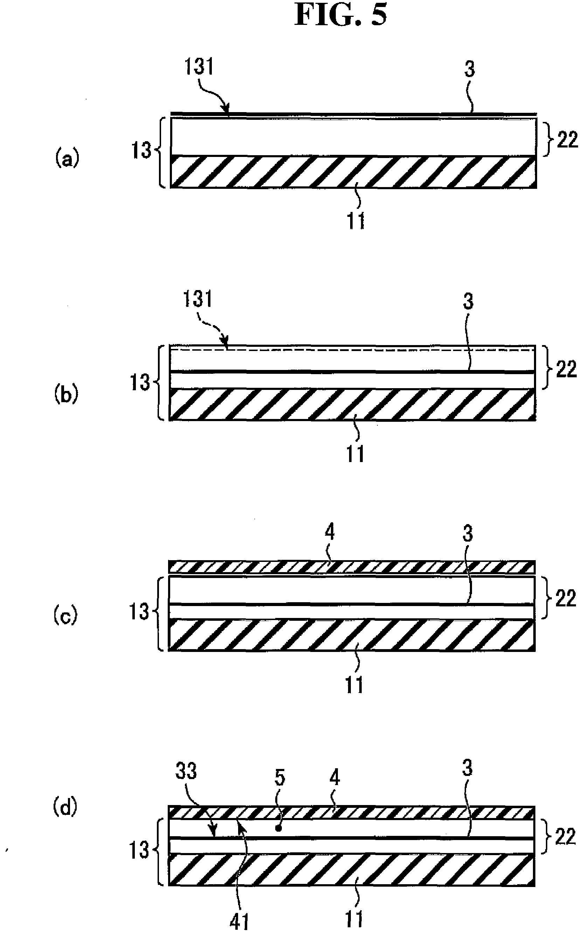

As a reference example of the present invention, Fig. 5(a) to Fig. 5(d) illustrate an example in which the protruding section 31 is not formed.

Fig. 5(a) to Fig. 5(d) are schematic cross-sectional views illustrating a state where the top seal is being attached to the resinous film. The cross-sectional surfaces illustrated in each of Fig. 5(a) to Fig. 5(d) correspond to the cross-sectional surface illustrated in Fig. 3(b).

As illustrated in Fig. 5(a), the resinous film 3 is placed on the top surface 131 of the flange section 13.

Next, as illustrated in Fig. 5(b), the resinous film 3 is suctioned via the container main body 11 by, for example, vacuum pressure. The container main body 11 uses paper as a main material. Thus, the resinous film 3 is closely bonded to the flange section 13 by suction. Here, the resinous film 3 is suctioned into the gap 22, and falls into the gap 22.

Next, as illustrated in Fig. 5(c), the top seal 4 is heated and placed on the resinous film 3.

Next, as shown in Fig. 5(d), the heated top seal 4 is pressed by the pressing machine, and attached to a top surface 33 of the resinous film 3 by thermocompression bonding. However, since the resinous film 3 is pushed into the gap 22, a lower surface 41 of the top seal 4 cannot reach the top surface 33 of the resinous film 3 inside the gap 22. Thus, a cavity 5 occurs between the top surface 33 of the resinous film 3 and the lower surface 41 of the top seal 4. Since both ends of the cavity 5 are opened, the container section 12 is communicated with the outside of the container main body 11 via the cavity 5.

Once the cavity 5 is born, even by covering the container section 12 with the top seal 4, leakage of contained matter or seepage of contained matter from the container section 12 occurs via the cavity 5.

### <Top Seal Attachment>

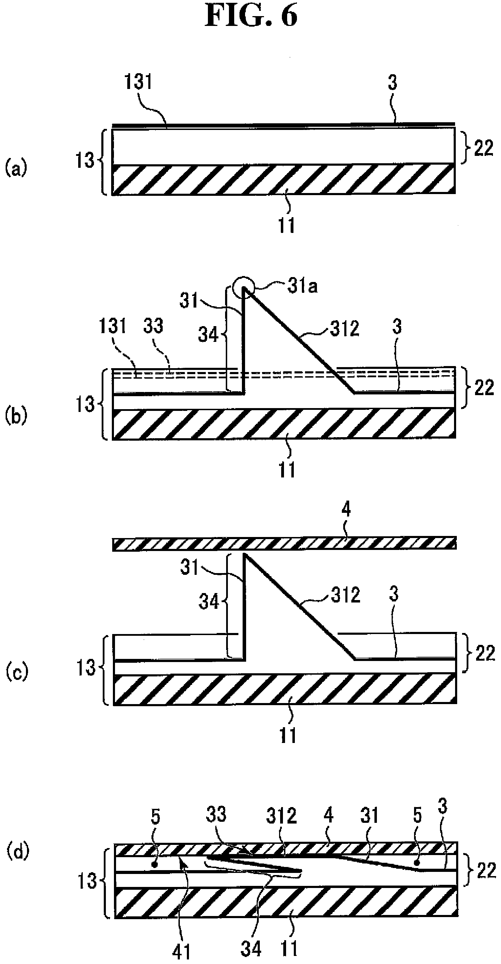

Fig. 6(a) to Fig. 6(d) are schematic cross-sectional views illustrating a state where the top seal is being attached to the resinous film. The cross-sectional surfaces illustrated in Fig. 6(a) to Fig. 6(d) correspond to the cross-sectional surface illustrated in Fig. 3(b).

As illustrated in Fig. 6(a), the resinous film 3 is placed on the top surface 131 of the flange section 13.

Next, as illustrated in Fig. 6(b), the resinous film 3 is suctioned via the assembled paper container 1 by, for example, vacuum pressure. The resinous film 3 is closely bonded to the top surface 131 of the flange section 13. Even in this embodiment, in the gap 22, the resinous film 3 is suctioned into the gap 22 and falls into the gap 22. However, the protruding section 31 remains protruded above the gap 22, exceeding the top surface 33 of the resinous film 3 on the top surface 131 of the flange section 13. An example of molding the protruding section 31 is described later.

Next, as shown in Fig. 6(c), the heated top seal 4 is placed on the resinous film 3.

Next, as shown in Fig. 6(d), the heated top seal 4 is pressed by the pressing machine. The top seal 4 is attached to the top surface 33 of the resinous film 3 by thermocompression bonding. Thus, the top surface of the resinous film 3 comes into contact with the lower surface 41 of the top seal 4.

In the process of the thermocompression bonding, the protruding section 31 is squashed by the top seal 4 being pressed by the pressing machine. Since the protruding section 31 traverses the gap 22, the protruding section 31 is squashed traversing the gap 22. A part of the protruding section 31 becomes a part of the top surface 33 of the resinous film 3. In this embodiment, as illustrated in Fig. 6(b), the protruding section 31 includes one first corner section 31a above the gap 22 traversing the gap 22. A cross-sectional surface in a direction along the gap 22 of the protruding section 31 has a triangular shape. A triangular inclined surface 312 becomes the top surface 33 of the resinous film 3 in the process of the protruding section 31 being squashed. Thus, the top surface of the resinous film 3 traverses the gap 22 and comes into contact with the lower surface 41 of the top seal 4.

According to this embodiment, the top seal 4 can be attached to the top surface 33 of the resinous film 3 by thermocompression bonding even above the gap 22. That is, the top seal 4 can be attached to the top surface of the resinous film 3 so as to block the cavity 5 above the gap 22.

As a result of the protruding section 31 being squashed, a sidewall 34 of the protruding section 31 of the resinous film 3 is folded in and forms a plurality of layers folded on top of one another at least in the gap 22. For example, Fig. 6(d) illustrates one example of the resinous film 3 being folded into three layers, but the resinous film 3 may be folded into three layers or more, for example in an accordion-folded shape. By the resinous film 3 being folded into a plurality of layers at least in the gap 22, the top seal 4 can be easily attached to the top surface 33 of the resinous film 3 by thermocompression bonding even above the gap 22. This is because the resinous film 3 folded into a plurality of layers applies a reactive force to the top seal 4 being pressed.

As indicated in Fig. 6(b), the protruding section 31 has the first corner section 31a. Advantageously, the protruding section 31 with the first corner section 31a can be more easily squashed compared with, for example, the protruding section 31 without the first corner section 31a. The first corner section 31a may have a smooth shape, such as a rounded shape, besides an angular shape.

Accordingly, the embodiment that can block the cavity 5 with the resinous film 3 and the top seal 4 can provide an assembled paper container 1 that can suppress leakage of contained matter or seepage of contained matter from the container section 12 of the container main body 11.

### (Film Adhesion Molding Machine)

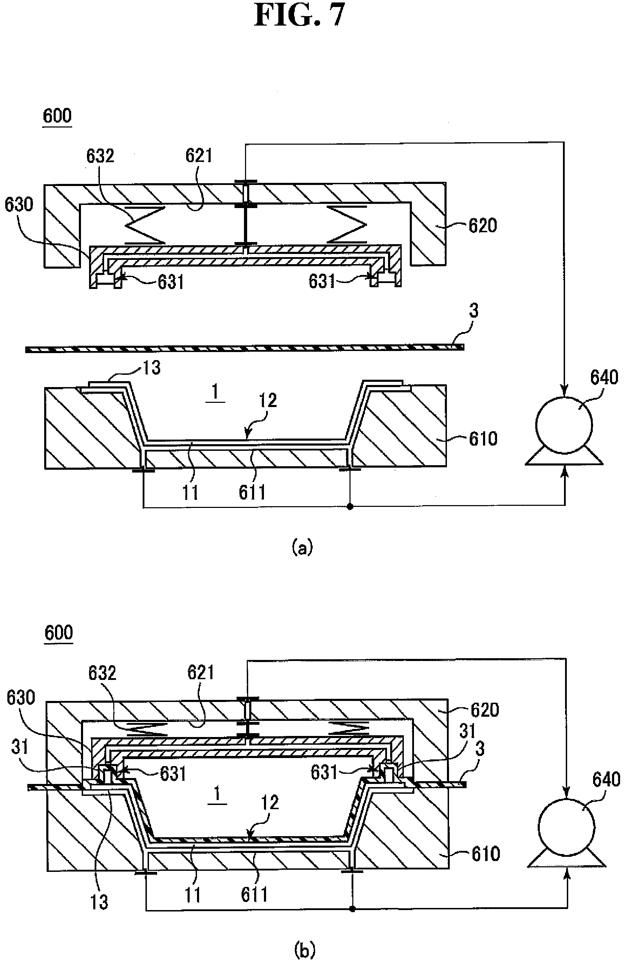

Fig. 7(a) and Fig. 7(b) are schematic cross-sectional views illustrating one example of the film adhesion molding machine.

A film adhesion molding machine 600 is a novel molding machine that can manufacture the assembled paper container 1 according to the embodiment. The film adhesion molding machine 600 attaches the resinous film 3 to the assembled paper container 1 with the flange section 13. Furthermore, when performing the attachment, the film adhesion molding machine 600 molds the protruding section 31 on the resinous film 3.

As illustrated in Fig. 7(a) and Fig. 7(b), the film adhesion molding machine 600 includes a lower mold 610, an adhesive section 611, an upper mold 620, a flange pressing section 630, and a molding section 631.

The assembled paper container 1 is placed on the lower mold 610.

The adhesive section 611 is provided in the lower mold 610. The adhesive section 611 is connected to a vacuum pump 640. The adhesive section 611 suctions the resinous film 3 via the assembled paper container 1 placed on the lower mold 610.

The upper mold 620 is opposed to the lower mold 610. The upper mold 620 is, for example, vertically movable. The resinous film 3 is sandwiched between the lower mold 610 and the upper mold 620. When the upper mold 620 is closely bonded to the lower mold 610, the resinous film 3 being sandwiched between the upper mold 620 and the lower mold 610, a processing space in an approximately sealed state is formed. Inside the processing space, the resinous film 3 is attached to the container section 12 and the flange section 13 by, for example, vacuum pressure.

The flange pressing section 630 is housed in the upper mold 620. The flange pressing section 630 is supported to a top panel portion 621 of the upper mold 620 by an extendable elastic member 632. One example of the elastic member 632 is a spring. The flange pressing section 630 presses the flange section 13 and the resinous film 3 on the flange section 13, for example, during the vacuum pressure.

The molding section 631 is provided to the flange pressing section 630. The molding section 631 is connected to the vacuum pump 640. The molding section 631 suctions a protruding section forming region of the resinous film 3 on the flange section 13. The protruding section forming region is set to traverse the gap 22. The protruding section 31 is formed, for example, while the resinous film 3 is being attached to the container section 12 and the flange section 13. A suction direction of the molding section 631 is opposite to a suction direction of the adhesive section 611. In this embodiment, the adhesive section 611 suctions the resinous film 3 in a direction heading toward the assembled paper container 1. The molding section 631 suctions the resinous film 3 in a direction moving away from the assembled paper container 1.

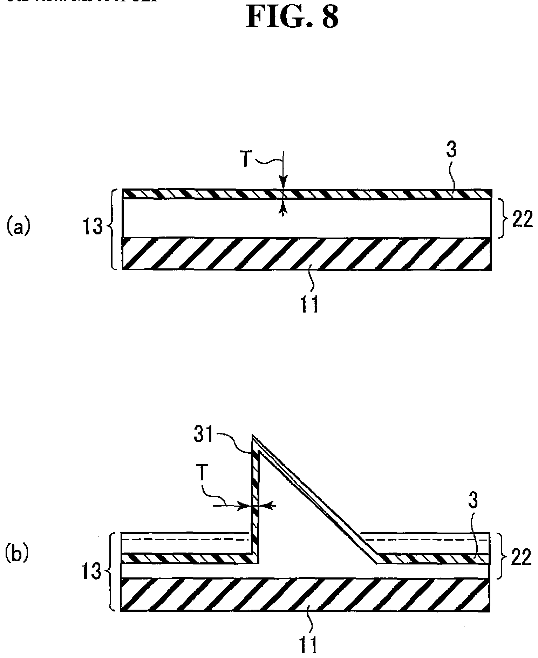

Fig. 8(a) and Fig. 8(b) are schematic cross-sectional views illustrating a state where the protruding section 31 is being formed.

As illustrated in Fig. 8(a) and Fig. 8(b), by molding the protruding section 31 through suction, a thickness T of the resinous film 3 changes before and after the suction. For example, after the suction, the thickness T of the resinous film 3 of the protruding section 31 becomes thinner. When the thickness T of the resinous film 3 of the protruding section 31 becomes thinner, the protruding section 31 becomes easier to fold or squash, compared with a case where the thickness T is thicker. This is one of the advantages of molding the protruding section 31 by suctioning the resinous film 3.

### (Exemplary Operation of the Film Adhesion Molding Machine)

As illustrated in Fig. 7(a) and Fig. 7(b), the heated resinous film 3 is led between the upper mold 620 and the lower mold 610 in a state where the upper mold 620 is separated from the lower mold 610.

Next, the assembled paper container 1 is placed on the lower mold 610.

Next, the upper mold 620 is moved down to press the resinous film 3 with the upper mold 620. Furthermore, the flange section 13 and the resinous film 3 on the flange section 13 are pressed by the flange pressing section 630.

Next, the resinous film 3 is suctioned by each the adhesive section 611 and the molding section 631. Accordingly, the resinous film 3 is attached to each the bottom surface 121 of the container section 12, the side surfaces 122 of the container section 12, and the top surface 131 of the flange section 13. Furthermore, the protruding section 31 that becomes a protrusion with respect to the flange section 13 is molded above the gap 22 on the flange section 13.

A suction timing of the molding section 631 may be earlier than a suction timing of the adhesive section 611. By shifting the suction timings as such, the protruding section 31 can be molded before the resinous film 3 is attached to the top surface 131 of the flange section 13. Thus, advantageously, the protruding section 31 becomes easier to mold.

Next, the upper mold 620 is moved up. Subsequently, the assembled paper container 1 altogether with the resinous film 3 is removed from the film adhesion molding machine.

Accordingly, the film adhesion molding machine 600 can manufacture the assembled paper container 1.

### (Film Attaching System)

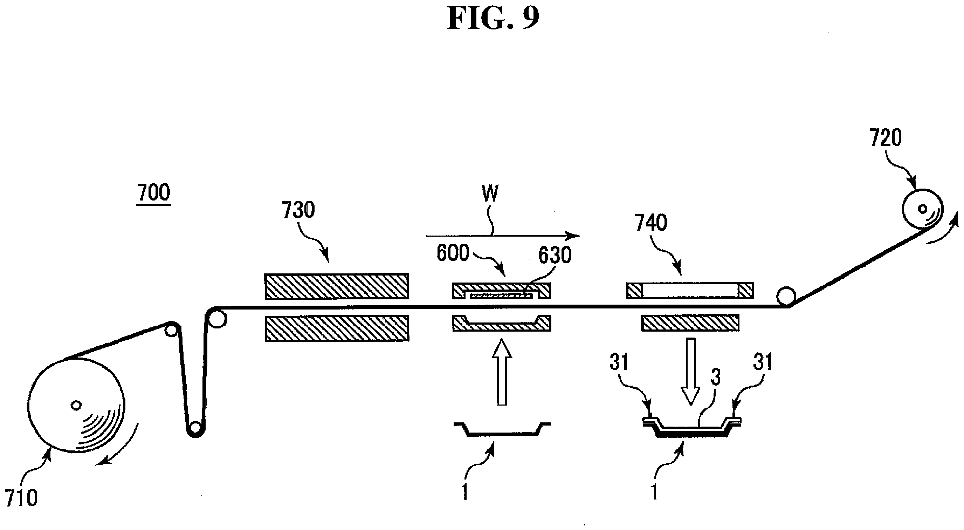

Fig. 9 is a schematic block diagram illustrating an example of the film attaching system.

While a film attaching system 700 winds the resinous film 3 wound around a supplying roller 710 using a winding roller 720, the film attaching system 700 also attaches the resinous film 3 to the assembled paper container 1 with the flange section 13.

As illustrated in Fig. 9, the film attaching system 700 includes the supplying roller 710, the winding roller 720, a heating machine 730, the film adhesion molding machine 600, and a trimming machine 740.

One roll of the strip-shaped resinous film 3 is mounted to the supplying roller 710.

One end of the strip-shaped resinous film 3 is mounted to the winding roller 720. The winding roller 720 winds the strip-shaped resinous film 3. The strip-shaped resinous film 3 moves along the feed direction W from the supplying roller 710 to the winding roller 720.

The heating machine 730 is arranged between the supplying roller 710 and the winding roller 720. The heating machine 730 heats the strip-shaped resinous film 3.

The film adhesion molding machine 600 is arranged between the heating machine 730 and the winding roller 720. The film adhesion molding machine 600 is, for example, the above-described film adhesion molding machine.

The trimming machine 740 is arranged between the film adhesion molding machine 600 and the winding roller 720. The trimming machine 740 trims the assembled paper container 1 attached to the strip-shaped resinous film 3 from the strip-shaped resinous film 3. Accordingly, the assembled paper container 1 is separated from the strip-shaped resinous film 3.

Thus, the film attaching system 700 includes the film adhesion molding machine 600. Accordingly, the film attaching system 700 can manufacture the assembled paper container 1. Moreover, the film attaching system 700 can successively manufacture the assembled paper container 1 from the strip-shaped resinous film 3.

### (Exemplary Modification of Protruding Section 31)

Next, some exemplary modifications of the protruding section 31 are described.

### <First Modification>

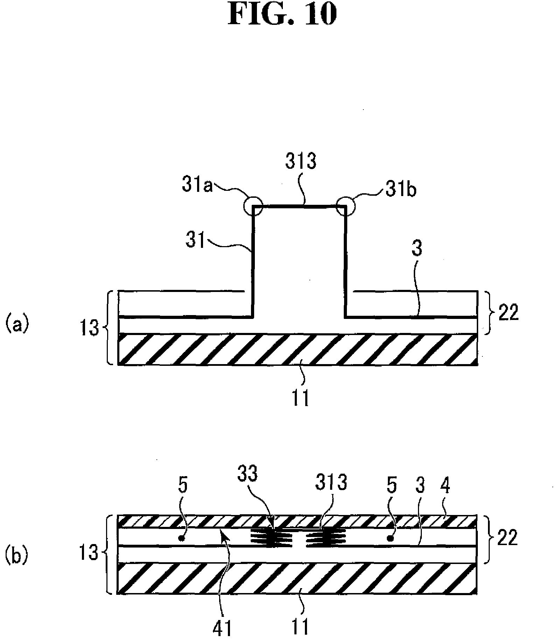

Fig. 10(a) and Fig. 10(b) are schematic cross-sectional views illustrating one example of the protruding section according to the first modification. The schematic cross-sectional surface illustrated in Fig. 10(a) indicates before attaching the top seal, and the schematic cross-sectional surface illustrated in Fig. 10(b) indicates after attaching the top seal.

As shown in Fig. 10(a) and Fig. 10(b), the protruding section 31 may include two of the first corner section 31a and a second corner section 31b above the gap 22. A cross-sectional surface in a direction along the gap 22 of the protruding section 31 has a quadrangular shape. In the first modification, a quadrangular top surface 313 becomes the top surface 33 of the resinous film 3 in the process of the protruding section 31 being squashed.

In the first modification, the top surface of the resinous film 3 traverses the gap 22 and can come into contact with the lower surface 41 of the top seal 4. Accordingly, the cavity 5 can be blocked by the resinous film 3 and the top seal 4.

Accordingly, the first modification can provide the assembled paper container 1 that can suppress leakage of contained matter or seepage of contained matter from the container section 12 of the container main body 11.

### <Second Modification>

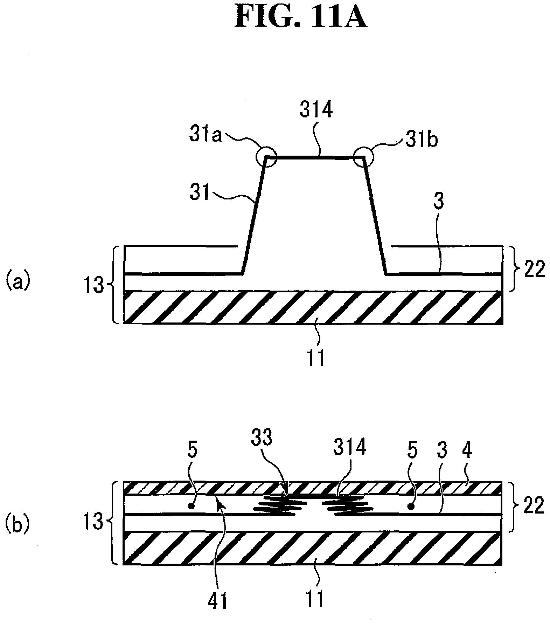

Fig. 11(a) and Fig. 11(b) are schematic cross-sectional views illustrating one example of the protruding section according to the second modification. The schematic cross-sectional surface illustrated in Fig. 11(a) indicates before attaching the top seal, and the schematic cross-sectional surface illustrated in Fig. 11(b) indicates after attaching the top seal.

As illustrated in Fig. 11(a) and Fig. 11(b), the cross-sectional surface in a direction along the gap 22 of the protruding section 31 may have a trapezoidal shape. In the second modification, a trapezoidal top surface 314 becomes the top surface 33 of the resinous film 3 in the process of the protruding section 31 being squashed.

The second modification can also provide the assembled paper container 1 that can suppress leakage of contained matter or seepage of contained matter from the container section 12 of the container main body 11.

### <Third Modification>

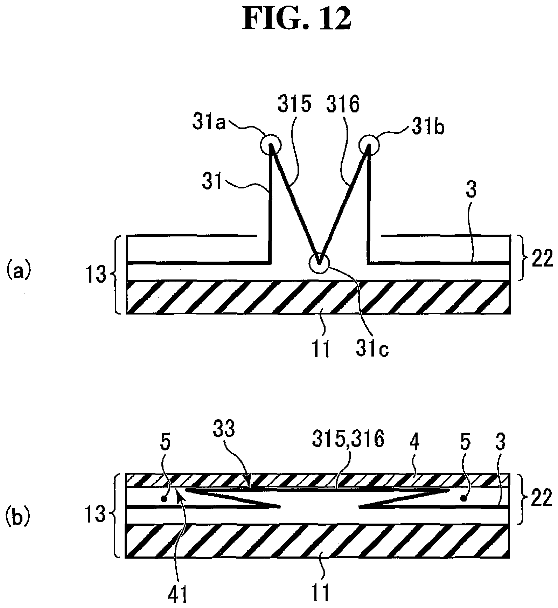

Fig. 12(a) and Fig. 12(b) are schematic cross-sectional views illustrating one example of the protruding section according to the third modification. The schematic cross-sectional surface illustrated in Fig. 12(a) indicates before attaching the top seal, and the schematic cross-sectional surface illustrated in Fig. 12(b) indicates after attaching the top seal.

As illustrated in Fig. 12(a) and Fig. 12(b), the cross-sectional surface in a direction along the gap 22 of the protruding section 31 may have a shape combining two triangles. In the third modification, this cross-sectional surface has a namely M character shape made by a first triangular inclined surface 315 and a second triangular inclined surface 316 facing one another. In the third modification, the protruding section 31 includes the first corner section 31a, the second corner section 31b, and a third corner section 31c above the gap 22. In the third modification, both the first triangular inclined surface 315 and the second triangular inclined surface 316 become the top surface 33 of the resinous film 3 in the process of the protruding section 31 being squashed.

The third modification can also provide the assembled paper container 1 that can suppress leakage of contained matter or seepage of contained matter from the container section 12 of the container main body 11.

In the third modification, both the first triangular inclined surface 315 and the second triangular inclined surface 316 become the top surface 33 of the resinous film 3. Thus, a contacted area of the top seal 4 and the top surface 33 of the resinous film 3 can be easily increased above the gap 22. Accordingly, as a further advantage, the third modification can easily enhance the effect of blocking the cavity 5.

### <Fourth Modification>

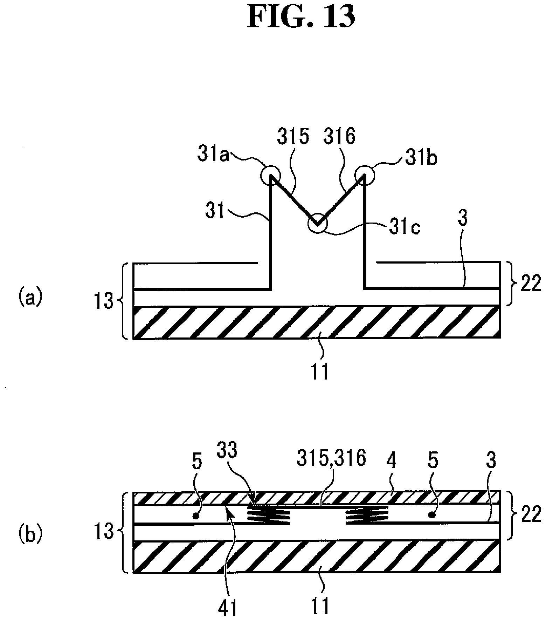

Fig. 13(a) and Fig. 13(b) are schematic cross-sectional views illustrating one example of the protruding section 31 of the fourth modification. The schematic cross-sectional surface illustrated in Fig. 13(a) indicates before attaching the top seal 4, and the schematic cross-sectional surface illustrated in Fig. 13(b) indicates after attaching the top seal 4.

As illustrated in Fig. 13(a) and Fig. 13(b), in a case where the cross-sectional surface in a direction along the gap 22 of the protruding section 31 has a M character shape, the first triangular portion and the second triangular portion may be formed up to the middle of the protruding section 31.

The fourth modification can also provide the assembled paper container 1 that can suppress leakage of contained matter or seepage of contained matter from the container section 12 of the container main body 11.

### < Fifth Modification>

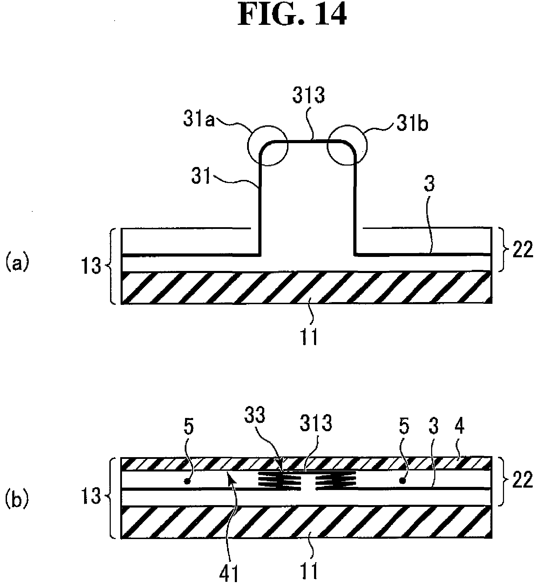

Fig. 14(a) and Fig. 14(b) are schematic cross-sectional views illustrating one example of the protruding section according to the fifth modification.

As illustrated in Fig. 14(a) and Fig. 14(b), in the first modification as an example, the first corner section 31a and the second corner section 31b may have a smooth shape, such as a rounded shape as illustrated, besides an angular shape. The same applies to the first corner section 31a in the above-described embodiment (see, for example, Fig. 6(b)), the first corner section 31a and the second corner section 31b in the second modification (see, for example, Fig. 11(a)), the first corner section 31a to the third corner section 31c in the third modification (see, for example, Fig. 12(a)), and the first corner section 31a to the third corner section 31c in the fourth modification (see, for example, Fig. 13(a)).

### <Sixth Modification>

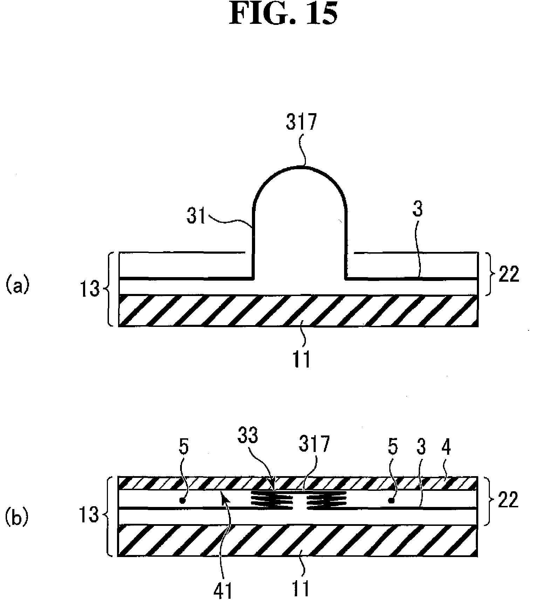

Fig. 15(a) and Fig. 15(b) are schematic cross-sectional views illustrating one example of the protruding section according to the sixth modification.

As illustrated in Fig. 15(a) and Fig. 15(b), a distal end surface 317 of the protruding section 31 may be entirely rounded. For example, even if the distal end surface 317 were entirely rounded, the protruding section 31 can be squashed into, for example, an accordion-folded shape. Accordingly, the sixth modification can also make the top surface 33 of the resinous film 3 be press-bonded to the top seal 4.

While the embodiment of the present invention has been described above, the above-described embodiment has been presented by way of example only, and is not intended to limit the scope of the invention. Embodiments of the present invention are not only the embodiment described above. The embodiments of the present invention can be performed in a variety of novel embodiments besides the embodiment described above. Therefore, various omissions, substitutions, and changes can be made to the embodiment described above without departing from the spirit of the invention. Such novel embodiments and modifications are included in the scope of the invention and abstract, and also in the scopes of the invention described in the scope of the claims and their equivalents.

### DESCRIPTION OF REFERENCE SIGNS

- 1:: Assembled paper container
- 11:: Container main body
- 12:: Container section
- 121:: Bottom surface
- 122:: Side surface
- 13:: Flange section
- 131:: Top surface
- 2:: Blank sheet
- 21:: End surface
- 22:: Gap
- 3:: Resinous film
- 31:: Protruding section
- 31a:: First corner section
- 31b:: Second corner section
- 31c:: Third corner section
- 312:: Triangular inclined surface
- 313:: Quadrangular top surface
- 314:: Trapezoidal top surface
- 315:: First triangular inclined surface
- 316:: Second triangular inclined surface
- 317:: Distal end surface of protruding section
- 32:: Pressing region
- 33:: Top surface
- 34:: Sidewall
- 4:: Top seal
- 41:: Lower surface
- 5:: Cavity
- 600:: Film adhesion molding machine
- 610:: Lower mold
- 611:: Adhesive section
- 620:: Upper mold
- 621:: Top panel portion
- 630:: Flange pressing section
- 631:: Molding section
- 632:: Elastic member
- 640:: Vacuum pump
- 700:: Film attaching system
- 710:: Supplying roller
- 720:: Winding roller
- 730:: Heating machine
- 740:: Trimming machine
- T:: Thickness
- W:: Feed direction

## Claims

1. An assembled paper container comprising:
a container main body assembled from a blank sheet using paper as a main material, the container main body including a container section; and
a resinous film covering an inner surface of the container section, wherein
the container main body includes:
a bottom surface;
a plurality of side surfaces standing upright from the bottom surface; and
a flange section connected to the plurality of side surfaces, the flange section being flush with a top surface after the assembly,
the top surface of the flange section has gaps caused by end surfaces of the blank sheet approaching one another, the gaps extending from the container section toward an outside of the container main body, and
the resinous film covers the top surface of the flange section and includes protruding sections above the gaps traversing the gaps.

2. The assembled paper container according to claim 1, wherein
the protruding section includes at least one corner section above the gap traversing the gap.

3. The assembled paper container according to claim 1 or 2, further comprising
a top seal attached to the resinous film on the top surface of the flange section and covering the container section, wherein
the top seal traverses the gaps while squashing the protruding sections, and the top seal is attached to the resinous film above the top surface of the flange section.

4. The assembled paper container according to claim 3, wherein
the resinous film is folded into three layers or more at least inside the gap.

5. A film adhesion molding machine attaching a resinous film to an assembled paper container with a flange section, the film adhesion molding machine comprising:
a lower mold on which the assembled paper container is placed;
an adhesive section provided to the lower mold, suctioning the resinous film via the assembled paper container placed on the lower mold, and attaching the resinous film to the assembled paper container;
an upper mold opposed to the lower mold and sandwiching the resinous film with the lower mold;
a flange pressing section housed in the upper mold and pressing the flange section and the resinous film on the flange section; and
a molding section provided to the flange pressing section, suctioning a protruding section forming region of the resinous film on the flange section, and molding a protruding section that becomes a protrusion with respect to the flange section on the resinous film.

6. The film adhesion molding machine according to claim 5, wherein
a suction direction of the molding section is opposite to a suction direction of the adhesive section.

7. The film adhesion molding machine according to claim 5 or 6, wherein
a suction timing of the molding section is earlier than a suction timing of the adhesive section.
